# EUROPÄISCHE PATENTSCHRIFT

(11) **EP 0 693 233 B1**
(45) Veröffentlichungstag und Bekanntmachung des Hinweises auf die Patenterteilung: **18.12.1996**
(21) Anmeldenummer: 94911911.9
(22) Anmeldetag: 17.03.1994
(51) Int. Cl.: H02K 9/04, H02K 1/20, H02K 9/19, B23Q 11/12

(54) **MOTORSPINDEL FÜR EINE WERKZEUGMASCHINE**
MOTOR SPINDLE FOR A MACHINE TOOL
BROCHE DE MOTEUR POUR MACHINE-OUTIL

(30) Priorität: 07.04.1993 DE 4311431
(43) Veröffentlichungstag der Anmeldung: 24.01.1996
(73) Patentinhaber: INDEX-WERKE GMBH & CO. KG HAHN & TESSKY, 73730 Esslingen (DE)
(72) Erfinder: LINK, Helmut, Friedrich, D-73773 Aichwald (DE); GROSSMANN, Walter, D-73666 Baltmannsweiler (DE)
(74) Vertreter: Hoeger, Stellrecht & Partner
(86) Internationale Anmeldenummer: EP9400843
(87) Internationale Veröffentlichungsnummer: WO9423485

(56) Entgegenhaltungen:
- EP-A- 0 084 271
- EP-A- 0 376 178
- EP-A- 0 415 138
- DE-A- 1 926 256
- DE-B- 1 134 189
- DE-C- 3 902 592
- FR-A- 655 366

## Beschreibung

Die Erfindung betrifft eine Kühlmittel-gekühlte Motorspindel für eine Werkzeugmaschine, und zwar insbesondere für eine Einzel-Werkstückspindel einer Drehmaschine.

Bei einer sogenannten Motorspindel handelt es sich um die Kombination einer Arbeitsspindel, d.h. der für das Halten eines zu bearbeitenden Werkstücks vorgesehenen Welle einer Werkzeugmaschine, mit einem Antriebsmotor, welcher einen Stator und einen Rotor besitzt, die koaxial zueinander und zur Arbeitsspindelachse angeordnet sind, wobei der im wesentlichen ringförmige Stator den gleichfalls im wesentlichen ringförmig ausgebildeten Rotor und letzterer die Arbeitsspindel umgibt und der Rotor mit der Arbeitsspindel drehfest verbunden ist.

Bei Werkzeugmaschinen, wie Drehmaschinen, ist es von großer Bedeutung, zu verhindern, daß durch den Betrieb der Werkzeugmaschine erzeugte Wärme zu temperaturbedingten Gestaltänderungen von Maschinenkomponenten führen, welche die Maßgenauigkeit von auf der Werkzeugmaschien bearbeiteten Werkstücken beeinträchtigen. Dieses Problem tritt besonders im Zusammenhang mit Motorspindeln auf, bei denen ein regelbarer Drehstrommotor direkt in ein die Arbeitsspindel lagerndes Spindelgehäuse integriert ist, da dort der Abführung der Verlustwärme des Motprs besondere Aufmerksamkeit gewidmet werden muß, u.z. nicht nur wegen der Unterbringung des Motors im Spindelgehäuse, sondern vor allem auch deshalb, weil beim Betrieb solcher Motorspindeln die maximale Motorleistung häufig voll ausgenutzt wird.

Aus dem Stand der Technik sind deshalb schon vielerlei Kühlsysteme für solche Motorspindeln bekannt, und nur beispielhaft sei auf die Lösungsvorschläge gemäß folgenden Druckschriften verwiesen: DE-PS 38 44 337 und EP-0 415 138-A der Firma INDEX-WERKE GmbH & Co. KG Hahn & Tessky, DE-PS 39 02 592, DE-PS 27 24 440, EP-A-0 084 271 und EP-A-0 094 680.

Durch alle diese vorbekannten Konstruktionen wird zwar versucht, die vom Motor einer Motorspindel erzeugte Wärme mit Hilfe eines strömenden Kühlmediums, insbesondere Luft, möglichst weitgehend aus der Motorspindel abzuführen, sie konnten jedoch nicht voll befriedigen, was nach Erkenntnis der Anmelderin darauf zurückzuführen ist, daß bei den bekannten Konstruktionen vor allem der Stator des Antriebsmotors, in dem der größte Teil der im Betrieb entwickelten Wärme entsteht, thermisch nicht hinreichend vom Spindelgehäuse abgekoppelt ist.

Der Erfindung lag deshalb die Aufgabe zugrunde, diese Unzulänglichkeit des Standes der Technik möglichst vollständig zu beseitigen, und ausgehend von einer Kühlmittelgekühlten Motorspindel für eine Werkzeugmaschine mit einer Werkstückspindel und einem Drehstrommotor, welcher einen die Werkstückspindelachse umgebenden, zu letzterer konzentrischen und mit der Werkstückspindel drehfest verbundenen Rotor sowie einen den letzteren umgebenden und zu diesem konzentrischen Stator besitzt, und mit einem den Drehstrommotor aufnehmenden Spindelgehäuse, in dem die Werkstückspindel um die Spindelachse drehbar gelagert ist, sowie den Stator umgebenden Kühlmittelkanälen läßt sich diese Aufgabe erfindungsgemäß dadurch lösen, daß - im Schnitt durch den Drehstrommotor senkrecht zur Spindelachse - wenigstens ein den Stator in Strömungsrichtung des Kühlmittels zumindest überwiegend umschließender innerer Kühlmittelkanal sowie wenigstens ein den Stator in Strömungsrichtung des Kühlmittels gleichfalls zumindest überwiegend umschließender äußerer Kühlmittelkanal vorgesehen sind, wobei der äußere Kühlmittelkanal in - auf die Spindelachse bezogen - radialer Richtung außerhalb des inneren Kühlmittelkanals liegt, und daß ein Kühlmitteleinlaß mit einem ersten Ende des äußeren Kühlmittelkanals, das zweite Ende des äußeren Kühlmittelkanals mit einem ersten Ende des inneren Kühlmittelkanals und das zweite Ende des inneren Kühlmittelkanals mit einem Kühlmittelauslaß verbunden ist.

Bei der erfindungsgemäßen Gestaltung des Kühlmittelsystems wird der Stator des Antriebsmotors durch den äußeren Kühlmittelkanal vom Spindelgehäuse (bei dem es sich auch um den Spindelkasten der Werkzeugmaschine handeln kann) thermisch isoliert, wobei zu berücksichtigen ist, daß im äußeren Kühlmittelkanal das noch nicht oder höchstens unwesentlich erwärmte Kühlmittel geführt wird. Auch verhindern der äußere und der innere Kühlmittelkanal einen nennenswerten Wärmeübergang durch Wärmestrahlung vom Stator auf das Spindelgehäuse. Wird das Kühlmittelsystem der erfindungsgemäßen Motorspindel mit Raumluft als Kühlmittel beschickt, entspricht die Temperatur des Spindelgehäuses also der Raumtemperatur, so daß durch Temperaturerhöhungen bedingte Formänderungen des Spindelgehäuses mit allen ihren Folgen für die Lagerung der Werkstückspindel und damit für die Genauigkeit von auf der Werkzeugmaschine bearbeiteten Werkstücken unterbleiben. Im Schnitt durch die Motorspindel, u.z. in einer die Spindelachse enthaltenden Ebene, ist der äußere und/oder der innere Kühlmittelkanal vorzugsweise genauso lang bzw. breit wie der Stator des Antriebsmotors; außerdem sind die beiden Kühlmittelkanäle vorzugsweise gleich breit. Grundsätzlich wäre es aber auch möglich, die Breite des Stators und der Kühlmittelkanäle etwas unterschiedlich zu wählen.

Bevorzugt wird das erfindungsgemäße Kühlmittelsystem der Motorspindel zur Führung von Luft als Kühlmittel ausgebildet; dadurch kann nicht nur auf eine besondere Kühlmittelquelle verzichtet werden, da einfach Umgebungsluft durch das Kühlmittelsystem der Motorspindel hindurchgefördert zu werden braucht, sondern es läßt sich noch ein weiterer Vorteil erreichen: Da in den das Kühlmittelsystem der erfindungsgemäßen Motorspindel bildenden Räumen in der Kühlluft ein Überdruck besteht, und da es völlig unkritisch ist, wenn Kühlluft aus dem Spindelgehäuse entweicht, d.h. wenn letzteres für die Kühlluft Leckstellen hat, kann bei der Verwendung von Luft als Kühlmittel ein Eindringen von Schmutz und bei der Werkstückbearbeitung eingesetzten Kühlschmierstoffen in die Motorspindel verhindert werden, insbesondere an denjenigen Stellen, an denen die Werkstückspindel aus dem Spindelgehäuse heraustritt.

Grundsätzlich könnte ein einziger äußerer und ein einziger innerer Kühlmittelkanal vorgesehen werden; z.B. könnte sich der äußere Kühlmittelkanal von einem Kühlmitteleinlaß am Spindelgehäuse über nahezu 360° um den Stator herum erstrecken und dann in den inneren Kühlmittelkanal münden, welcher sich gleichfalls über nahezu 360° um den Stator herum erstreckt und dann in den Kühlmittelauslaß mündet. Vorteilhafter ist jedoch eine Konstruktion, bei der zwei innere sowie zwei äußere Kühlmittelkanäle vorgesehen sind, deren jeder den Stator ungefähr halbschalenförmig umgibt, wobei die zweiten Enden der äußeren Kühlmittelkanäle einander benachbart und mit den einander gleichfalls benachbarten ersten Enden der inneren Kühlmittelkanäle verbunden sind. Auf diese Weise läßt sich die Erwärmung des Kühlmittels längs der äußeren Kühlmittelkanäle minimieren, da die äußeren Kühlmittelkanäle dann kürzer sind als ein einziger, den Stator nahezu vollständig umfassender Kühlmittelkanal, und außerdem läßt sich durch die kürzeren inneren Kühlmittelkanäle der Stator wirksamer kühlen.

Obwohl Kühlmitteleinlaß und Kühlmittelauslaß an verschiedenen Stellen der Motorspindel bzw. des Spindelgehäuses angeordnet sein können, empfehlen sich Ausführungsformen, bei denen Kühlmitteleinlaß und Kühlmittelauslaß einander benachbart angeordnet sind. Der dadurch erzielte einfachere Aufbau bringt besonders dann Vorteile mit sich, wenn die erfindungsgemäße Motorspindel nicht an einem Maschinengestell angebracht ist, sondern auf einem Maschinenschlitten, so daß ein besonderer Aspekt der Erfindung in einer Drehmaschine gesehen wird, welche zwei einander gegenüberliegende Werkstückspindeln besitzt, deren Spindelachsen miteinander fluchten und von denen wenigstens eine für eine Werkstückübernahme auf die andere vorschiebbar und als erfindungsgemäße Motorspindel ausgebildet ist.

Sind Kühlmitteleinlaß und Kühlmittelauslaß einander benachbart angeordnet und in der vorstehend beschriebenen Weise zwei äußere und zwei innere Kühlmittelkanäle vorgesehen, so ist es besonders vorteilhaft, wenn der Kühlmittelauslaß als Kanal ausgebildet ist und von einem den Kühlmitteleinlaß bildenden, im Querschnitt ringförmigen Kanal umgeben wird; bei einer solchen Ausführungsform mit zum Kühlmittelauslaß konzentrischem Kühlmitteleinlaß lassen sich die beiden äußeren und inneren Kühlmittelkanäle ohne Überschneidungen besonders einfach an den Kühlmitteleinlaß bzw. Kühlmittelauslaß anschließen.

Um einen guten Wärmeübergang vom Stator zu den im inneren Kühlmittelkanal geführten Kühlmittel herbeizuführen, wird vorgeschlagen, die Konstruktion so auszubilden, daß Statorbleche des Stators an dessen Aupenumfang lamellenartige, in Umfangsrichtung verlaufende Kühlrippen bilden, welche sich in den inneren Kühlmittelkanal hineinerstrecken, wobei es besonders vorteilhaft ist, wenn die Statorbleche ein Lamellenpaket bilden und ein Teil der Statorbleche in radialer Richtung eine größere Erstreckung aufweist als die anderen Statorbleche. Ein solcher Aufbau des Statorblechpakets ist an sich aus der DE-PS 38 44 337 der Firma INDEX-WERKE GmbH & Co. KG Hahn & Tessky bekannt.

Um in besonders einfacher Weise den äußeren Kühlmittelkanal zu bilden, wird vorgeschlagen, bei einer Motorspindel, deren Spindelgehäuse eine äußere Umfangswand besitzt, mit dieser die äußere Wand des äußeren Kühlmittelkanals zu bilden, d.h. die Konstruktion so zu gestalten, daß die äußere Umfangswand des Spindelgehäuses - im Schnitt durch den Motor senkrecht zur Spindelachse - den äußeren Kühlmittelkanal nach außen begrenzt.

Bei einer bevorzugten Ausführungsform der erfindungsgemäßen Motorspindel ist der Stator über ringförmige Isolierkörper mit geringer Wärmeleitfähigkeit am Spindelgehäuse gehalten. Dadurch wird der Stator noch wirksamer thermisch vom Spindelgehäuse getrennt. Zur Vereinfachung der Konstruktion wird für diesen Fall vorgeschlagen, die Isolierkörper den äußeren Kühlmittelkanal in Richtung der Spindelachse begrenzen zu lassen.

Damit das im äußeren Kühlmittelkanal strömende Kühlmittel durch das im inneren Kühlmittelkanal strömende und erwärmte Kühlmittel möglichst wenig erwärmt wird, sieht eine bevorzugte Ausführungsform der Erfindung eine zwischen äußerem und innerem Kühlmittelkanal liegende Wand vor, welche wärmeisolierende Eigenschaften hat. Analog wird für Ausführungsformen, bei denen Kühlmitteleinlaß und Kühlmittelauslaß einander benachbart angeordnet sind, vorgeschlagen, zwischen Kühlmitteleinlaß und Kühlmittelauslaß eine Wand mit wärmeisolierenden Eigenschaften vorzusehen.

Da auch im Rotor des Antriebsmotors, wenn auch in geringerem Maß, Wärme entwickelt wird, wird empfohlen, zwischen Rotor und Werkstückspindel eine Schicht mit wärmeisolierenden Eigenschaften vorzusehen. Aus dem selben Grund und zur Kühlung auch des Rotors sowie für eine noch intensivere Kühlung des Stators wird empfohlen, einen zwischen Stator und Rotor vorhandenen Ringspalt'als Teil der Kühlmittelführung zwischen Kühlmitteleinlaß und Kühlmittelauslaß auszubilden.

Bei den für die in Rede stehenden Motorspindeln eingesetzten Motoren besitzt der Stator üblicherweise Wicklungen, welche zu beiden Seiten (quer zur Spindelachse gesehen) des Stators Vorsprünge, sogenannte Wicklungsköpfe, bilden. Zur Kühlung dieser Wicklungsköpfe ist eine besonders vorteilhafte Ausführungsform der erfindungsgemäßen Motorspindel so gestaltet, daß an mindestens einer Seite des Drehstrommotors eine Ringkammer vorgesehen ist, welche Teil der Kühlmittelführung zwischen Kühlmitteleinlaß und Kühlmittelauslaß ist und in die die Wicklungsköpfe der einen Statorseite hineinragen. Ist zu beiden Seiten des Drehstrommotors eine solche Ringkammer vorgesehen, kann man eine Zwangsführung des Kühlmittels durch beide Ringkammern auch dadurch erreichen, wenn diese durch den Ringspalt zwischen Stator und Rotor miteinander verbunden sind, wobei dann gleichzeitig auch eine Zwangsführung des Kühlmittels durch diesen Ringspalt hindurch erfolgt. Damit für diesen Pfad des Kühlmittelsystems dasselbe Druckgefälle zur Verfügung steht, aufgrund dessen das Kühlmittel den äußeren und den inneren Kühlmittelkanal durchströmt, ist bei einer besonders vorteilhaften Ausführungsform die eine der genannten Ringkammern mit dem zweiten Ende des äußeren Kühlmittelkanals und die andere Ringkammer mit dem zweiten Ende des inneren Kühlmittelkanals verbunden.

Zur thermischen Abkoppelung der Motorspindel von dem sie tragenden Maschinenteil, sei es nun das Maschinengestell oder ein Schlitten, empfiehlt es sich, zwischen dem abströmseitigen Ende des Kühlmitteleinlaßkanals und dem Spindelgehäuse sowie zwischen letzterem und dem anströmseitigen Ende des Kühlmittelauslaßkanals jeweils eine Weichdichtung anzuordnen, besonders in den Fällen, in denen der Kühlmittelauslaßkanal von einem Rohr gebildet wird, das konzentrisch von einem den Kühlmitteleinlaßkanal bildenden Rohr umgeben wird, denn dann verhindern nicht nur die beiden Weichdichtungen einen Wärmeübergang, sondern das noch kühle Kühlmittel zwischen dem äußeren und dem inneren Rohr verhindert einen Wärmeübergang von dem im inneren Rohr geführten erwärmten Kühlmittel auf die das äußere Rohr umgebenden bzw. haltenden Maschinenteile.

Weitere Vorteile und Einzelheiten der Erfindung ergeben sich aus den beigefügten Ansprüchen und/oder aus der nachfolgenden Beschreibung sowie der beigefügten zeichnerischen Darstellung einer besonders vorteilhaften Ausführungsform der erfindungsgemäßen Motorspindel mit angrenzenden Kühlmittelzufuhr- und -abfuhrleitungen.

In der Zeichnung zeigen:
- Fig. 1:: einen Schnitt durch die Motorspindel und die an diese angrenzenden Bereiche der Kühlmittelleitungen, u.z. einen Schnitt längs einer die Achse der Werkstückspindel enthaltenden Ebene (Schnitt nach der Linie 1-1 in Figur 2), und
- Fig. 2:: einen Querschnitt entsprechend der Linie 2-2 in Figur 1.

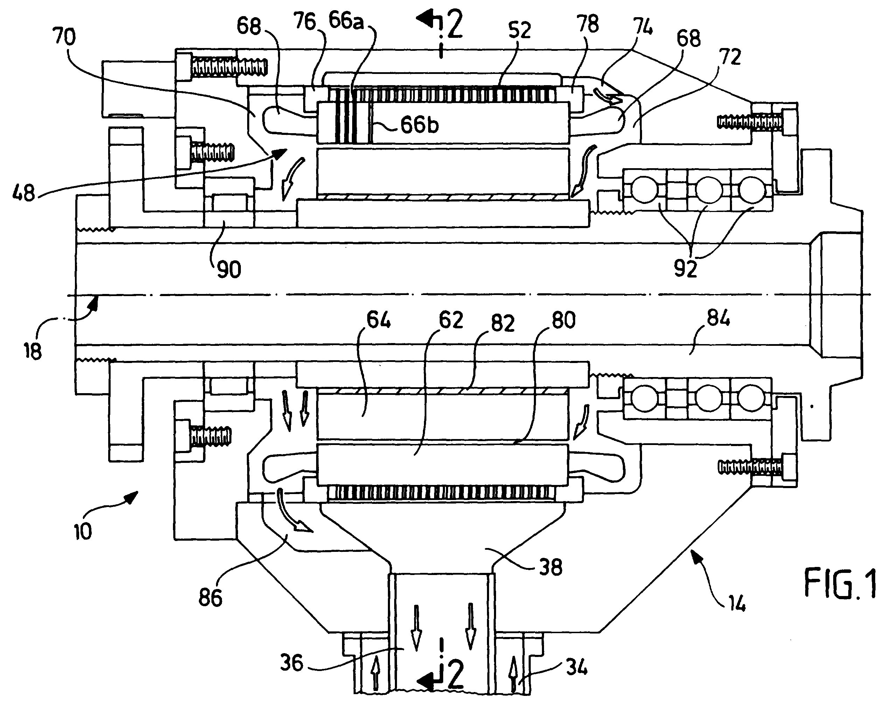

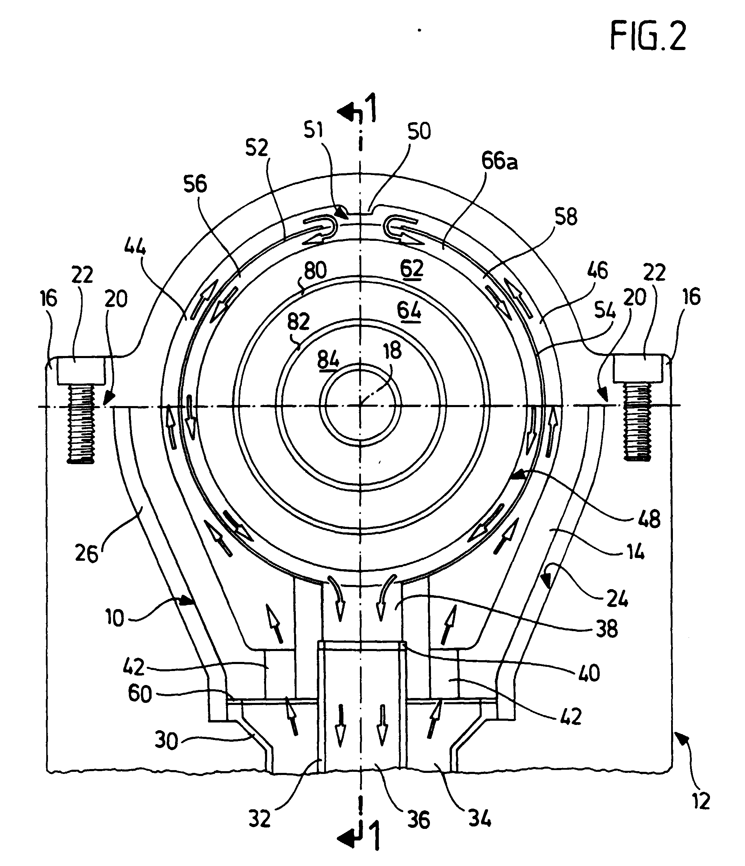

Die Figuren 1 und 2 zeigen die erfindungsgemäße Motorspindel 10, welche, wie die Figur 2 erkennen läßt, an einem Maschinengestell 12 einer Werkzeugmaschine befestigt ist. Auch die Art der Anbringung der Motorspindel 10 an dem Maschinengestell 12 (an dessen Stelle auch ein Maschinenschlitten treten könnte) ist erfindungsgemäß in besonderer Weise gestaltet, u.z. derart, daß ein Spindelgehäuse 14 der Motorspindel 10 an seinen beiden Längsseiten angeformte Befestigungsleisten 16 besitzt, welche einander bezüglich einer Spindelachse 18 diametral gegenüber liegen und auf in einer gemeinsamen Ebene liegenden Befestigungsflächen 20 des Maschinengestells 12 aufliegen und auf diesen mittels Schrauben 22 befestigt sind. Desweiteren ist das Maschinengestell 12 (oder im Falle eines Schlittens dieser) erfindungsgemäß so gestaltet, daß er eine Aussparung 24 mit einer solchen Form besitzt, daß sich zwischen der Motorspindel 10 bzw. deren Spindelgehäuse 14 und dem Maschinengestell 12 ein Zwischenraum 26 ergibt, so daß die Motorspindel 10 nur an den Befestigungsflächen 20 Kontakt mit dem Maschinengestell 12 hat.

Erfindungsgemäß sind in das Maschinengestell 12 zwei zueinander konzentrische Rohre eingesetzt, nämlich ein Außenrohr 30 und ein Innenrohr 32, wobei es sich insbesondere bei dem letzteren um ein wärmeisolierendes Kunststoffrohr handelt.

Ein Ringkanal zwischen dem Außenrohr 30 und dem Innenrohr 32 bildet einen Kühlmitteleinlaßkanal 34, während das Innenrohr 32 einen Kühlmittelauslaßkanal 36 definiert. In letzteren mündet ein von einer Bohrung des Spindelgehäuses 14 gebildeter Kühlmittelauslaß 38 der Motorspindel, wobei sich zwischen dem gemäß Figur 2 oberen Ende des Innenrohrs 32 und einer Stufe der den Kühlmittelauslaß 38 bildenden abgestuften Bohrung ein Weichdichtungsring 40 befindet. Um die den Kühlmittelauslaß 38 bildende Bohrung herum und im Abstand von dieser weist das Spindelgehäuse 14 mehrere kanalartige Durchbrüche 42 auf, welche den Kühlmitteleinlasskanal 34 mit zwei äußeren Kühlmittelkanälen 44 und 46 verbinden, die einen in Figur 1 als Ganzes mit 48 bezeichneten Drehstrommotor jeweils halbschalenförmig umgeben und insbesondere konzentrisch zur Spindelachse 18 verlaufen. Wie die Figur 2 deutlich erkennen läßt, sind die äußeren Kühlmittelkanäle 44, 46 erfindungsgemäß in die innere Wandfläche des Spindelgehäuses 14 eingearbeitet und enden an einem rippenförmigen Vorsprung 50 des Spindelgehäuses. An diesem sind zwei vom oberen Ende des Kühlmittelauslaßes 38 ausgehende, die Spindelachse 18 jeweils nahezu halbschalenförmig umgreifende Mantelbleche 52 und 54 befestigt, welche möglichst wärmeisolierende Eigenschaften haben sollen und im Bereich des Vorsprungs 50 einen sich in Richtung der Spindelachse 18 erstreckenden Spalt 51 zwischen sich einschließen, dessen Länge ungefähr der Länge des Motors 48 entspricht. Zwischen den Mantelblechen 52 und 54 und dem Umfang des Motors 48 werden so zwei innere Kühlmittelkanäle 56 und 58 gebildet, welche konzentrisch zu den äußeren Kühlmittelkanälen 44 und 46 verlaufen sowie den Motor 48 gleichfalls nahezu halbschalenförmig umfassen.

Während die gemäß Figur 2 unteren, ersten Enden der äußeren Kühlmittelkanäle 44 und 46 mit dem Kühlmitteleinlaßkanal 34 verbunden sind, sind die oberen, zweiten Enden der äußeren Kühlmittelkanäle 44 und 46 über den Spalt 51 mit den gemäß Figur 2 oberen, ersten Enden der inneren Kühlmittelkanäle 56 und 58 verbunden, deren gemäß Figur 2 untere, zweite Enden in den Kühlmittelauslaß 38 münden.

Erwähnt sei noch, daß das Außenrohr 30 über einen zweiten Weichdichtungsring 60 an das Spindelgehäuse 14 angeschlossen ist.

Im folgenden soll nun anhand der Figur 1 der Drehstrommotor 48 näher erläutert werden.

Der Motor 48 besteht im wesentlichen aus einem sogenannten Stator 62 und einem Rotor 64, welche beide ungefähr kreisringförmig gestaltet und konzentrisch zur Spindelachse 18 angeordnet sind. Aufbau und Wirkungsweise eines solchen Drehstrommotors, welcher üblicherweise als Hohlwellenmotor bezeichnet wird, sind bekannt, so daß der Motor im folgenden nur insoweit beschrieben werden wird, als dies für die vorliegende Erfindung von Bedeutung ist.

Der Stator 62 besitzt ein Paket von in radialer Richtung (bezogen auf die Spindelachse 18) langen und kurzen Statorblechen 66a bzw. 66b, welche in Richtung der Spindelachse 18 abwechselnd aufeinandergeschichtet sind, so daß die in die inneren Kühlmittelkanäle 56 und 58 hineinragenden langen Statorbleche 66a eine außerordentlich große Kühlfläche bilden.

In Figur 1 sind die Statorbleche 66a nur zu einem Teil und nur einige wenige der Statorbleche 66b dargestellt. Außerdem umfaßt der Stator 62 eine Wicklung, welche Wicklungsköpfe 68 bildet, die von beiden Seiten des eigentlichen Statorkörpers abstehen und in Ringkammern 70 und 72 hineinragen, welche zu beiden Seiten des Motors 48 vom Spindelgehäuse 14 gebildet werden sowie konzentrisch zur Spindelachse 18 ausgebildet sind. Die gemäß Figur 1 rechte Ringkammer 72 ist mit den zweiten Enden der äußeren Kühlmittelkanäle 44 und 46 verbunden, und zwar über einen Kanal 74, welcher im Bereich des Spalts 51 in die äußeren Kühlmittelkanäle 44 und 46 mündet.

Der Stator 62 wird über zwei ringförmige Isolierkörper 76 und 78 mit wärmeisolierenden Eigenschaften vom Spindelgehäuse 14 gehalten, und diese beiden Isolierkörper begrenzen die inneren Kühlmittelkanäle 56 und 58 an ihren Schmalseiten, d.h. in Richtung der Spindelachse 18.

Zwischen dem Stator 62 und dem Rotor 64 befindet sich ein Ringspalt 80, und der Rotor 64 ist fest mit einer im Spindelgehäuse 14 um die Spindelachse 18 drehbar gelagerten Werkstückspindel 84 verbunden, u.z. über eine Isolierschicht 82, welche die Gestalt eines Hohlzylinders besitzt und wärmeisolierende Eigenschaften hat. Wie die Figur 1 erkennen läßt, soll das gemäß dieser Figur rechte Ende der Werkstückspindel 84 zur Aufnahme einer Werkstück-Spannvorrichtung ausgebildet sein.

Erfindungsgemäß gelangt also Kühlmittel über den Kanal 74 in die Ringkammer 72, strömt von dort über den Ringspalt 80 in die Ringkammer 70 und gelangt schließlich über einen Kanal 86 des Spindelgehäuses 14 in dessen Kühlmittelauslap 38 und damit in den Kühlmittelauslaßkanal 36, so daß durch diesen Kühlmittelstrom nicht nur die Wicklungsköpfe 68 gekühlt werden, sondern auch eine noch bessere Kühlung des Stators 62 bewirkt wird, ebenso aber auch eine Kühlung des Rotors 64. Bei Verwendung von Luft als Kühlmittel besitzt die dargestellte Konstruktion noch einen weiteren Vorteil: Da die Kühlluft in den Ringkammern 70 und 72 unter Überdruck steht - die Kühlluft wird ja unter Druck in das erfindungsgemäße Kühlmittelsystem gefördert -, verhindert sie ein Eindringen von Schmutz, Kühlschmiermitteln und dergleichen in die Motorspindel über diejenigen Stellen, an denen die Werkstückspindel 84 aus dem Spindelgehäuse 14 austritt sowie über die Lager 90 und 92, mit deren Hilfe die Werkstückspindel im Spindelgehäuse 14 gelagert ist.

Aus dem Vorstehenden ergibt sich, daß das Grundprinzip der erfindungsgemäßen Lösung auch darin gesehen werden kann, daß der Motor von wenigstens zwei zur Spindelachse sowie zueinander konzentrischen, von Kühlmittel durchströmten Kühlmittelkanälen umschlossen wird, von denen ein radial innerer Kühlmittelkanal von Kühlmittel durchströmt wird, welches die Motorkühlung im wesentlichen bewirkt, während der radial äußere Kühlmittelkanal von Kühlmittel durchströmt wird, das eine thermische Abkopplung des Motors vom Spindelgehäuse bewirkt. Diese beiden Kühlmittelkanäle müssen dabei nicht notwendigerweise in Reihe geschaltet sein, d.h. für das Grundprinzip der erfindungsgemäßen Lösung ist es nicht notwendig, das Kühlmittel nach Durchströmen des äußeren Kühlmittelkanals in den inneren Kühlmittelkanal zu leiten.

Bei der erfindungsgemäßen Konstruktion ist aber nicht nur das Spindelgehäuse vom Motor thermisch abgekoppelt, sondern auch das Maschinengestell 12 oder ein an seine Stelle tretender Maschinenschlitten grenzt nicht unmittelbar an Bereiche an, in denen erwärmtes Kühlmittel geführt wird.

## Patentansprüche

1. Kühlmittel-gekühlte Motorspindel (10) für eine Werkzeugmaschine, wobei die Motorspindel eine Werkstückspindel (84) und einen Drehstrommotor (48) aufweist, welcher einen die Werkstückspindelachse (18) umgebenden, zu letzterer konzentrischen und mit der Werkstückspindel (84) drehfest verbundenen Rotor (64) sowie einen den letzteren umgebenden und zu diesem konzentrischen Stator (62) besitzt, und mit einem den Drehstrommotor (48) aufnehmenden Spindelgehäuse (14), in dem die Werkstückspindel (84) um die Spindelachse (18) drehbar gelagert ist, sowie mit den Stator (62) umgebenden Kühlmittelkanälen (44, 46, 56, 58),
**dadurch gekennzeichnet**, daß
- im Schnitt durch den Drehstrommotor (48) senkrecht zur Spindelachse (18) - wenigstens ein den Stator (62) in Strömungsrichtung des Kühlmittels zumindest überwiegend umschließender innerer Kühlmittelkanal (56, 58) sowie wenigstens ein den Stator (62) in Strömungsrichtung des Kühlmittels gleichfalls zumindest überwiegend umschließender äußerer Kühlmittelkanal (44, 46) vorgesehen sind, wobei der äußere Kühlmittelkanal (44, 46) in - auf die Spindelachse (18) bezogen - radialer Richtung außerhalb des inneren Kühlmittelkanals (56, 58) liegt, und daß ein Kühlmitteleinlaß (42) mit einem ersten Ende des äußeren Kühlmittelkanals (44, 46), das zweite Ende des äußeren Kühlmittelkanals mit einem ersten Ende des inneren Kühlmittelkanals (56, 58) und das zweite Ende des inneren Kühlmittelkanals mit einem Kühlmittelauslaß (38) verbunden ist.

2. Motorspindel nach Anspruch 1, dadurch gekennzeichnet, daß zwei innere (56, 58) sowie zwei äußere (44, 46) Kühlmittelkanäle vorgesehen sind, deren jeder den Stator (62) ungefähr halbschalenförmig umgibt, wobei die zweiten Enden der äußeren Kühlmittelkanäle (44, 46) einander benachbart und mit den einander benachbarten ersten Enden der inneren Kühlmittelkanäle (56, 58) verbunden sind.

3. Motorspindel nach Anspruch 1 oder 2, dadurch gekennzeichnet, daß Kühlmitteleinlaß (42) und Kühlmittelauslaß (38) einander benachbart sind.

4. Motorspindel nach Anspruch 3, dadurch gekennzeichnet, daß der Kühlmittelauslaß (38, 36) als Kanal ausgebildet ist und vom Kühlmitteleinlaß (34, 42), welcher insbesondere von einem im Querschnitt ringförmigen Kanal (34) gebildet ist, umgeben wird.

5. Motorspindel nach einem oder mehreren der vorstehenden Ansprüche, dadurch gekennzeichnet, daß Statorbleche (66a, 66b) des Stators (62) an dessen Aupenumfang lamellenartige, in Umfangsrichtung verlaufende Kühlrippen (66a) bilden, welche sich in den inneren Kühlmittelkanal (56, 58) hineinerstrecken.

6. Motorspindel nach Anspruch 5, dadurch gekennzeichnet, daß die Statorbleche (66a, 66b) ein Lamellenpaket bilden, wobei ein Teil der Statorbleche (66a) in radialer Richtung eine größere Erstreckung aufweist als die anderen Statorbleche (66b).

7. Motorspindel nach einem oder mehreren der vorstehenden Ansprüche, dadurch gekennzeichnet, daß das Spindelgehäuse (14) eine äußere Umfangswand besitzt, welche - im Schnitt durch den Motor (48) senkrecht zur Spindelachse (18) - den äußeren Kühlmittelkanal (44, 46) nach außen begrenzt.

8. Motorspindel nach einem oder mehreren der vorstehenden Ansprüche, dadurch gekennzeichnet, daß der Stator (62) über Isolierkörper (76, 78) mit geringer Wärmeleitfähigkeit am Spindelgehäuse (14) gehalten ist.

9. Motorspindel nach Anspruch 8, dadurch gekennzeichnet, daß die Isolierkörper (76, 78) den inneren Kühlmittelkanal (44, 46) in Richtung der Spindelachse (18) begrenzen.

10. Motorspindel nach einem oder mehreren der vorstehenden Ansprüche, dadurch gekennzeichnet, daß eine zwischen äußerem und innerem Kühlmittelkanal (44, 46 bzw. 56, 58) liegende Wand (52, 54) wärmeisolierende Eigenschaften hat.

11. Motorspindel nach einem oder mehreren der Ansprüche 4 bis 10, dadurch gekennzeichnet, daß eine zwischen Kühlmitteleinlaß (34) und Kühlmittelauslaß (36) liegende Wand (32) wärmeisolierende Eigenschaften hat.

12. Motorspindel nach einem oder mehreren der vorstehenden Ansprüche dadurch gekennzeichnet, daß zwischen Rotor (64) und Werkstückspindel (84) eine Schicht (82) mit wärmeisolierenden Eigenschaften vorgesehen ist.

13. Motorspindel nach einem oder mehreren der vorstehenden Ansprüche, dadurch gekennzeichnet, daß ein Ringspalt (80) zwischen Stator (62) und Rotor (64) Teil der Kühlmittelführung zwischen Kühlmitteleinlaß (42) und Kühlmittelauslaß (38) ist.

14. Motorspindel nach einem oder mehreren der vorstehenden Ansprüche, dadurch gekennzeichnet, daß an mindestens einer Seite des Motors (48) eine Ringkammer (70, 72) vorgesehen ist, welche Teil der Kühlmittelführung zwischen Kühlmitteleinlaß (42) und Kühlmittelauslaß (38) ist.

15. Motorspindel nach den Ansprüchen 13 und 14, dadurch gekennzeichnet, daß zu beiden Seiten des Motors (48) vorgesehene Ringkammern (70, 72) durch den Ringspalt (80) miteinander verbunden sind.

16. Motorspindel nach Anspruch 15, dadurch gekennzeichnet, daß die eine Ringkammer (72) mit dem zweiten Ende des äußeren Kühlmittelkanals (44, 46) und die andere Ringkammer (70) mit dem zweiten Ende des inneren Kühlmittelkanals (56, 58) verbunden ist.

17. Motorspindel nach einem oder mehreren der Ansprüche 4 bis 16, dadurch gekennzeichnet daß zwischen dem abströmseitigen Ende des Kühlmitteleinlaßkanals (34) und dem Spindelgehäuse (14) sowie zwischen letzterem und dem anströmseitigen Ende des Kühlmittelauslaßkanals (36) jeweils eine Weichdichtung (60, 40) angeordnet ist.

18. Motorspindel nach einem oder mehreren der vorstehenden Ansprüche, dadurch gekennzeichnet, daß der äußere Kühlmittelkanal (44, 46) in eine innere Wand des Spindelgehäuses (14) eingeformt ist.

19. Motorspindel nach einem oder mehreren der vorstehenden Ansprüche, dadurch gekennzeichnet, daß das Spindelgehäuse (14) nebeneinander wenigstens eine Kühlmitteleinlaßöffnung (42) und eine Kühlmittelauslaßöffnung (38) besitzt, zwischen denen das Spindelgehäuse eine Trennwand bildet, und daß die Kühlmitteleinlaßöffnung (42) mit dem ersten Ende des äußeren Kühlmittelkanals (44, 46) und die Kühlmittelauslaßöffnung (38) mit dem zweiten Ende des inneren Kühlmittelkanals (56, 58) verbunden ist.

## Claims

1. Motor spindle (10) cooled by coolant for a machine tool, said motor spindle comprising a workpiece spindle (84) and a three-phase motor (48) having a rotor (64) surrounding the workpiece spindle axis (18), concentric with the workpiece spindle axis and rotation-wise fixedly connected to the workpiece spindle (84) and a stator (62) surrounding said rotor and concentric with said rotor, further comprising a spindle housing (14) accommodating said three-phase motor (48) and having said workpiece spindle (84) mounted therein for rotational movement about said spindle axis (18), and also comprising coolant channels (44, 46, 56, 58) surrounding said stator (62), **characterized in that** - in section through said three-phase motor (48) perpendicular to said spindle axis (18)
- at least one inner coolant channel (56, 58) enclosing said stator (62) at least to a major extent in the direction of flow of said coolant and at least one outer coolant channel (44, 46) also enclosing said stator (62) at least to a major extent in the direction of flow of said coolant are provided, said outer coolant channel (44, 46) lying in the radial direction - in relation to said spindle axis (18) - outside said inner coolant channel (56, 58), and in that a coolant inlet (42) is connected to a first end of said outer coolant channel (44, 46), the second end of said outer coolant channel to a first end of said inner coolant channel (56, 58) and the second end of said inner coolant channel to a coolant outlet (38).

2. Motor spindle as defined in claim 1, characterized in that two inner (56, 58) and two outer (44, 46) coolant channels are provided, each of which surrounds said stator (62) in approximately half-shell-shaped configuration, the second ends of said outer coolant channels (44, 46) being adjacent to one another and connected to the first ends of said inner coolant channels (56, 58) which are adjacent to one another.

3. Motor spindle as defined in claim 1 or 2, characterized in that coolant inlet (42) and coolant outlet (38) are adjacent to one another.

4. Motor spindle as defined in claim 3, characterized in that said coolant outlet (38, 36) is designed as a channel and is surrounded by said coolant inlet (34, 42) which, in particular, is formed by a channel (34) of annular cross section.

5. Motor spindle as defined in one or several of the preceding claims, characterized in that stator laminations (66a, 66b) of said stator (62) form on the outer circumference thereof lamina-type cooling fins (66a) extending in the circumferential direction and projecting into said inner coolant channel (56, 58).

6. Motor spindle as defined in claim 5, characterized in that said stator laminations (66a, 66b) form a set of laminae, with some of said stator laminations (66a) extending to a greater extent in the radial direction than the other ones of said stator laminations (66b).

7. Motor spindle as defined in one or several of the preceding claims, characterized in that said spindle housing (14) has an outer circumferential wall which - in section through said motor (48) perpendicular to said spindle axis (18) - outwardly delimits said outer coolant channel (44, 46).

8. Motor spindle as defined in one or several of the preceding claims, characterized in that said stator (62) is held by way of insulating bodies (76, 78) with low thermal conductivity on said spindle housing (14).

9. Motor spindle as defined in claim 8, characterized in that said insulating bodies (76, 78) delimit said inner coolant channel (44, 46) in the direction of said spindle axis (18).

10. Motor spindle as defined in one or several of the preceding claims, characterized in that a wall (52, 54) located between outer and inner coolant channels (44, 46 and 56, 58, respectively) has heat-insulating properties.

11. Motor spindle as defined in one or several of claims 4 to 10, characterized in that a wall (32) located between coolant inlet (34) and coolant outlet (36) has heat-insulating properties.

12. Motor spindle as defined in one or several of the preceding claims, characterized in that a layer (82) with heat-insulating properties is provided between rotor (64) and workpiece spindle (84).

13. Motor spindle as defined in one or several of the preceding claims, characterized in that an annular gap (80) between stator (62) and rotor (64) is part of the path along which coolant is conducted between coolant inlet (42) and coolant outlet (38).

14. Motor spindle as defined in one or several of the preceding claims, characterized in that an annular chamber (70, 72) provided on at least one side of said motor (48) is part of the path along which coolant is conducted between coolant inlet (42) and coolant outlet (38).

15. Motor spindle as defined in claims 13 and 14,
characterized in that annular chambers (70, 72) provided on both sides of said motor (48) are connected to one another by said annular gap (80).

16. Motor spindle as defined in claim 15, characterized in that one annular chamber (72) is connected to the second end of said outer coolant channel (44, 46) and the other annular chamber (70) to the second end of said inner coolant channel (56, 58).

17. Motor spindle as defined in one or several of claims 4 to 16, characterized in that a soft seal (60, 40) is arranged between the outflow end of said coolant inlet channel (34) and said spindle housing (14) and between said spindle housing and the inflow end of said coolant outlet channel (36), respectively.

18. Motor spindle as defined in one or several of the preceding claims, characterized in that said outer coolant channel (44, 46) is formed in an inner wall of said spindle housing (14).

19. Motor spindle as defined in one or several of the preceding claims, characterized in that said spindle housing (14) has alongside one another at least one coolant inlet opening (42) and one coolant outlet opening (38), between which said spindle housing forms a dividing wall, and in that said coolant inlet opening (42) is connected to the first end of said outer coolant channel (44, 46) and said coolant outlet opening (38) to the second end of said inner coolant channel (56, 58).

## Revendications

1. Broche à moteur (10) refroidie par un fluide réfrigérant pour une machine-outil, ladite broche à moteur comprenant une broche porte-pièce (84) et un moteur triphasé (48), qui est constitué d'un rotor (64) entourant l'axe (18) de la broche porte-pièce, est concentrique par rapport à cet axe et est relié de manière rigide à la broche porte-pièce (84) ainsi que d'un stator (62) qui entoure le rotor et qui est concentrique par rapport à celui-ci, la broche à moteur comportant en outre un carter de broche (14) recevant le moteur triphasé (48), dans lequel la broche porte-pièce (84) est montée à rotation autour de l'axe de broche (18), ainsi que des canaux de fluide réfrigérant (44, 46, 56, 58) entourant le stator (62), caractérisée en ce que - en coupe à travers le moteur triphasé (48) perpendiculairement à l'axe (18) de la broche - sont prévus au moins un canal intérieur de fluide réfrigérant (56, 58) entourant au moins principalement le stator (62) dans le sens d'écoulement du fluide réfrigérant, ainsi qu'au moins un canal extérieur de fluide réfrigérant (44, 46) entourant également au moins principalement le stator (62) dans le sens d'écoulement du fluide réfrigérant, le canal extérieur de fluide réfrigérant (44, 46) étant disposé - par rapport à l'axe (18) de la broche - dans le sens radial à l'extérieur du canal intérieur de fluide réfrigérant (56, 58), et en ce qu'une entrée de fluide réfrigérant (42) est raccordée à une première extrémité du canal extérieur de fluide réfrigérant (44, 46), la deuxième extrémité du canal extérieur de fluide réfrigérant étant raccordée à une première extrémité du canal intérieur de fluide réfrigérant (56, 58) et la deuxième extrémité du canal intérieur de fluide réfrigérant étant raccordée à une sortie de fluide réfrigérant (38).

2. Broche à moteur suivant la revendication 1, caractérisée en ce que sont prévus deux canaux intérieurs de fluide réfrigérant (56, 58) ainsi que deux canaux extérieurs (44, 46) de fluide réfrigérant, chacun d'eux formant approximativement une demi-enveloppe qui entoure le stator (62), les deuxièmes extrémités des canaux extérieurs de fluide réfrigérant (44, 46) étant contiguës l'une à l'autre et raccordées aux premières extrémités contiguës l'une à l'autre des canaux intérieurs de fluide réfrigérant (56, 58).

3. Broche à moteur suivant la revendication 1 ou la revendication 2, caractérisée en ce que l'entrée de fluide réfrigérant (42) et la sortie de fluide réfrigérant (38) sont contiguës l'une à l'autre.

4. Broche à moteur suivant la revendication 3, caractérisée en ce que la sortie de fluide réfrigérant (38, 36) est conçue comme un canal et est entourée par l'entrée de fluide réfrigérant (34, 42) qui est formée en particulier d'un canal (34) de section transversale annulaire.

5. Broche à moteur suivant l'une ou plusieurs des revendications précédentes, caractérisée en ce que des tôles de stator (66a, 66b) du stator (62) forment à la périphérie extérieure de celui-ci des ailettes de refroidissement (66a) en forme de lames orientées dans le sens circonférentiel et s'étendant à l'intérieur du canal intérieur de fluide réfrigérant (56, 58).

6. Broche à moteur suivant la revendication 5, caractérisée en ce que les tôles de stator (66a, 66b) forment un paquet de lames, une partie des tôles de stator (66a) présentant une plus grande extension dans la direction radiale que les autres tôles de stator (66b).

7. Broche à moteur suivant l'une ou plusieurs des revendications précédentes, caractérisée en ce que le carter de broche (14) comprend une paroi périphérique externe qui - en coupe à travers le moteur (48) perpendiculairement à l'axe (18) de la broche - délimite le canal extérieur de fluide réfrigérant (44, 46) vers l'extérieur.

8. Broche à moteur suivant l'une ou plusieurs des revendications précédentes, caractérisée en ce que le stator (62) est maintenu au niveau du carter de broche (14) par des corps isolants (76, 78) de conductibilité thermique plus faible.

9. Broche à moteur suivant la revendication 8, caractérisée en ce que les corps isolants (76, 78) limitent le canal intérieur de fluide réfrigérant (44, 46) dans le sens de l'axe (18) de la broche.

10. Broche à moteur suivant l'une ou plusieurs des revendications précédentes, caractérisée en ce qu'une paroi (52, 54) située entre le canal extérieur de fluide réfrigérant (44, 46) et le canal intérieur de fluide réfrigérant (56, 58) a des propriétés calorifuges.

11. Broche à moteur suivant l'une ou plusieurs des revendications 4 à 10, caractérisée en ce qu'une paroi (32) située entre l'entrée de fluide réfrigérant (34) et la sortie de fluide réfrigérant (36) a des propriétés calorifuges.

12. Broche à moteur suivant l'une ou plusieurs des revendications précédentes, caractérisée en ce qu'une couche (82) présentant des propriétés calorifuges est prévue entre le rotor (64) et la broche porte-pièce (84).

13. Broche à moteur suivant l'une ou plusieurs des revendications précédentes, caractérisée en ce qu'un interstice annulaire (80) entre le stator (62) et le rotor (64) fait partie du circuit de fluide réfrigérant entre l'entrée de fluide réfrigérant (42) et la sortie de fluide réfrigérant (38).

14. Broche à moteur suivant l'une ou plusieurs des revendications précédentes, caractérisée en ce que d'un côté au moins du moteur (48) est prévue une chambre annulaire (70, 72) qui fait partie du circuit de fluide réfrigérant entre l'entrée de fluide réfrigérant (42) et la sortie de fluide réfrigérant (38).

15. Broche à moteur suivant les revendications 13 et 14, caractérisée en ce que des chambres annulaires (70, 72) prévues des deux côtés du moteur (48) sont raccordées l'une à l'autre par l'interstice annulaire (80).

16. Broche à moteur suivant la revendication 15, caractérisée en ce que la première chambre annulaire (72) est raccordée à la deuxième extrémité du canal extérieur de fluide réfrigérant (44, 46) et la deuxième chambre annulaire (70) est raccordée à la deuxième extrémité du canal intérieur du fluide réfrigérant (56, 58).

17. Broche à moteur suivant l'une ou plusieurs des revendications 4 à 16, caractérisée en ce qu'un joint d'étanchéité souple (60, 40) est disposé respectivement entre l'extrémité d'aval du canal d'entrée de fluide réfrigérant (34) et la boite à broche (14), ainsi qu'entre cette dernière et l'extrémité d'amont du canal de sortie de fluide réfrigérant (36).

18. Broche à moteur suivant l'une ou plusieurs des revendications précédentes, caractérisée en ce que le canal extérieur de fluide réfrigérant (44, 46) est moulé dans une paroi interne du carter de broche (14).

19. Broche à moteur suivant l'une ou plusieurs des revendications précédentes, caractérisée en ce que le carter de broche (14) présente au moins une ouverture d'entrée de fluide réfrigérant (42) et une ouverture de sortie de fluide réfrigérant (38) placées l'une à côté de l'autre et entre lesquelles le carter de broche forme une paroi de séparation, et en ce que l'ouverture d'entrée de fluide réfrigérant (42) est raccordée à la première extrémité du canal extérieur de fluide réfrigérant (44, 46) et l'ouverture de sortie de fluide réfrigérant (38) est raccordée à la deuxième extrémité du canal intérieur de fluide réfrigérant (56, 58).
